# EUROPÄISCHE PATENTSCHRIFT

(11) **EP 1 612 648 B1**
(45) Veröffentlichungstag und Bekanntmachung des Hinweises auf die Patenterteilung: **03.10.2007**
(21) Anmeldenummer: 05012347.0
(22) Anmeldetag: 08.06.2005
(51) Int. Cl.: G06F 1/32

(54) **Konfiguration von Bauelementen bei einem Übergang von einem Niedrigleistungs-Betriebsmodus in einen Normalleistungs-Betriebsmodus**
Configuration of components when changing from a low-power to a normal-power consumption mode
Configuration des constituants hardware durant la transition d'un mode basse-puissance vers un mode normal

(30) Priorität: 02.07.2004 DE 102004032237
(43) Veröffentlichungstag der Anmeldung: 04.01.2006
(60) Teilanmeldung: 06021723.9
(73) Patentinhaber: Infineon Technologies AG, 81669 München (DE)
(72) Erfinder: Mahrla, Peter, 85604 Zorneding (DE); Hildebrand, Uwe, 91058 Erlangen (DE); Sellar, David, 81675 München (DE); Goedecke, Michael, 80634 München (DE)
(74) Vertreter: Patentanwälte Lambsdorff & Lange

(56) Entgegenhaltungen:
- EP-A- 0 504 007
- EP-A- 0 805 386
- EP-A- 1 037 133
- EP-A- 1 313 025
- US-A- 6 065 124
- US-A1- 2004 225 907
- US-B1- 6 230 274

## Beschreibung

Die Erfindung betrifft die Wiederherstellung der Inhalte flüchtiger Speicherelemente einer Schaltungsanordnung bei einer Rückkehr in einen Normalleistungs-Betriebsmodus aus einem Niedrigleistungs-Betriebsmodus.

In der vorliegenden Patentanmeldung wird unter einem Niedrigleistungs-Betriebsmodus ein Betriebsmodus verstanden, bei welchem der Energiebedarf des betreffenden Bauelements bzw. der betreffenden Schaltungsanordnung reduziert ist und dementsprechend das Bauelement bzw. die Schaltungsanordnung nicht die Funktionen ausführen können, für welche es bzw. sie eigentlich ausgelegt sind. Ein Niedrigleistungs-Betriebsmodus ist beispielsweise ein Bereitschaftsmodus bzw. ein Stand-by-Betriebsmodus. Unter einem Niedrigleistungs-Betriebsmodus ist auch eine zeitweilige Trennung von der Versorgungsspannung zu verstehen. In einem Normalleistungs-Betriebsmodus können die Funktionen des betreffenden Bauelements bzw. der betreffenden Schaltungsanordnung, für welche das Bauelement bzw. die Schaltungsanordnung ausgelegt sind, ausgeführt werden.

Bei einem Prozessor-Speicher-System, das dazu ausgelegt ist, dass mehrere Prozessoren auf eine Speichereinheit zugreifen können, stellt sich das Problem, dass eine Steuereinheit, welche die Zugriffe der Prozessoren auf die Speichereinheit steuert, bei einem zeitweiligen Herunterfahren in einen Niedrigleistungs-Betriebsmodus ihre Registerwerte verliert. Bei einem späteren "Aufwecken" der Steuereinheit stehen diese Registerwerte der Steuereinheit also nicht mehr zur Verfügung. Der Konfigurationszustand der Steuereinheit ist daher nach dem Hochfahren in den Normalleistungs-Betriebsmodus unbestimmt. Eine genauer Konfigurationszustand der Steuereinheit ist jedoch notwendig, da nur ein solcher Zustand gewährleistet, dass die Steuereinheit mit der Speichereinheit korrekt zusammenwirkt und dass die Datenausgänge der Steuereinheit, über welche die Prozessoren die angeforderten Daten beziehen, in der richtigen Weise eingerichtet sind. Es ist daher erforderlich, nach einer Rückkehr der Steuereinheit in den Normalleistungs-Betriebsmodus die für ihre Konfiguration benötigten Daten wieder in die Register der Steuereinheit zu laden.

Bei herkömmlichen Prozessor-Speicher-Systemen sind die zur Konfiguration der Steuereinheit benötigten Registerwerte in einem nicht-flüchtigen Speicher abgelegt und werden nach dem Zurückführen der Steuereinheit in den Normalleistungs-Betriebsmodus in die Steuereinheit geladen. Dieser Vorgang wird von einem der Prozessoren gesteuert. Nachteilig an dieser Vorgehensweise ist, dass der Prozessor, der für die Konfiguration der Steuereinheit zuständig ist, sich bei jedem derartigen Konfigurationsvorgang selbst in einem Normalleistungs-Betriebsmodus befinden muss. Es kann beispielsweise der Fall auftreten, dass sich sämtliche Prozessoren und die Steuereinheit in einem Niedrigleistungs-Betriebsmodus befinden. Sobald einer der Prozessoren "aufgeweckt" wird und dieser Prozessor Daten aus der Speichereinheit benötigt, muss nicht nur die Steuereinheit, sondern auch der für ihre Konfiguration zuständige Prozessor in den Normalleistungs-Betriebsmodus zurückgeführt werden. Dieser Prozessor kann also in einem derartigen Fall nicht im Niedrigleistungs-Betriebsmodus belassen werden. Dies bedingt einen erhöhten Strombedarf des Prozessor-Speicher-Systems. Ferner ist ein hoher Software-Aufwand zur Steuerung des Prozessor-Speicher-Systems erforderlich.

Das vorstehend beschriebene Problem stellt sich nicht nur bei Prozessor-Speicher-Systemen, sondern ganz allgemein bei Schaltungsanordnungen, welche einen Schaltungsteil aufweisen, der in einen Niedrigleistungs-Betriebsmodus heruntergefahren werden kann. Bei einer späteren Aktivierung dieses Schaltungsteils sind die Inhalte von flüchtigen Speicherelementen und Registern nicht mehr vorhanden. Um den Zustand, der vor dem Herunterfahren in den Niedrigleistungs-Betriebsmodus bestand, wiederherzustellen, müssen die Inhalte von flüchtigen Speicherelementen und Registern vor dem Herunterfahren in einen Speicher, der seinen Inhalt während des Niedrigleistungs-Betriebsmodus des betreffenden Schaltungsteils beibehält, geladen werden. Nach der Wiederherstellung des Normalleistungs-Betriebsmodus können die zuvor zwischengespeicherten Daten wieder in die entsprechenden Speicherelemente und Register des betreffenden Schaltungsteils transferiert werden. Das beschriebene Zwischenspeichern der Daten und ihr späteres Zurückschreiben in die flüchtigen Speicherelemente und Register wird bei herkömmlichen Schaltungsanordnungen von einem Prozessor vorgenommen. Dies bedingt einen erhöhten Stromverbrauch und eine komplexe Software.

In der Druckschrift EP 0 805 386 A1 wird ein Computersystem mit verschiedenen Betriebszuständen beschrieben. In der Druckschrift EP 1 313 025 A2 wird die Funktion eines DMA-Controllers in einem Computersystem beschrieben.

Aufgabe der Erfindung ist, eine Schaltungsanordnung zu schaffen, von der sich zumindest ein Teil zeitweise in einem Niedrigleistungs-Betriebsmodus befinden kann. Bei einem anschließenden Hochfahren dieses Schaltungsteils soll sich der ursprüngliche Zustand des Schaltungsteils mit relativ geringem Aufwand wiederherstellen lassen.

Die der Erfindung zugrunde liegende Aufgabenstellung wird durch die Merkmale des unabhängigen Patentanspruchs 1 gelöst. Vorteilhafte Weiterbildungen und Ausgestaltungen der Erfindung sind in den Unteransprüchen angegeben.

Die Erfindung bezieht sich auf eine Schaltungsanordnung mit einem Schaltungsteil, welcher Speicherelemente aufweist, die bei einem Niedrigleistungs-Betriebsmodus ihre Speicherinhalte verlieren. Des Weiteren enthält die erfindungsgemäße Schaltungsanordnung eine Speichereinheit, die im Gegensatz zu den Speicherelementen des Schaltungsteils ihren Speicherinhalt während eines Niedrigleistungs-Betriebmodus des Schaltungsteils beibehält. Ferner ist ein DMA-Controller vorgesehen, welcher dazu ausgelegt ist, die in vorgegebenen Speicherelementen des Schaltungsteils abgelegten Daten vor einem Wechsel des Schaltungsteils von einem Normalleistungs-Betriebsmodus in einen Niedrigleistungs-Betriebsmodus in die Speichereinheit zu schreiben und diese Daten nach der Rückkehr des Schaltungsteils in den Normalleistungs-Betriebsmodus wieder in die Speicherelemente zurückzutransferieren.

Die erfindungsgemäße Schaltungsanordnung entlastet einen Prozessor, welcher bei herkömmlichen Schaltungsanordnungen für den Datentransfer im Zuge eines Wechsels des Betriebsmodus zuständig ist. Dadurch werden Chipfläche, Stromverbrauch und Software-Aufwand reduziert. Ferner verursacht der DMA-Controller keinen zusätzlichen Aufwand, da er in den meisten Mikrocontroller-Systemen ohnehin vorgesehen ist.

Eine besonders bevorzugte Ausgestaltung der erfindungsgemäßen Schaltungsanordnung sieht zwei Listen bzw. Tabellen vor, welche Informationen über die bei einem Betriebsmoduswechsel vorzunehmenden Datentransfers enthalten. Eine erste Liste beinhaltet die Informationen, die für einen Wechsel des Schaltungsteils von dem Normalleistungs-Betriebsmodus in den Niedrigleistungs-Betriebsmodus erforderlich sind. Eine zweite Liste betrifft den umgekehrten Fall, nämlich einen Wechsel des Schaltungsteils von dem Niedrigleistungs-Betriebsmodus in den Normalleistungs-Betriebsmodus.

Die beiden Listen enthalten beispielsweise Angaben über die Start- und Zieladressen der auszuführenden Datentransfers, Angaben über die Inkrementoperationen bezüglich der Start- bzw. Zieladressen nach einem ausgeführten Datentransfer sowie Angaben über die Anzahl der auszuführenden Datentransfers.

Die erste Liste und/oder die zweite Liste sind vorzugsweise in der Speichereinheit abgelegt. Damit wird sichergestellt, dass die beiden Listen nach dem Ende des Niedrigleistungs-Betriebsmodus zur Verfügung stehen.

Die Speicherelemente des Schaltungsteils, die bei einem Niedrigleistungs-Betriebsmodus ihre Speicherinhalte verlieren, können beispielsweise flüchtige Speicher und/oder Register sein.

Vorzugsweise ist eine Hardwareeinheit oder ein Prozessor vorgesehen, welche oder welcher dazu ausgelegt ist, Steuersignale zu erzeugen, die vor einem Wechsel des Schaltungsteils von einem Normalleistungs-Betriebsmodus in einen Niedrigleistungs-Betriebsmodus und/oder nach der Rückkehr des Schaltungsteils in den Normalleistungs-Betriebsmodus den DMA-Controller veranlassen, die notwendigen Datentransfers auszuführen.

Des Weiteren kann vorteilhafterweise der DMA-Controller auch selbst in einen Niedrigleistungs-Betriebsmodus überführt werden. In diesem Fall muss der DMA-Controller derart ausgelegt sein, dass er beim Hochfahren aus dem Niedrigleistungs-Betriebsmodus die für seine Konfiguration benötigten Konfigurationsdaten aus der Speichereinheit lädt.

Die Erfindung wird nachfolgend in beispielhafter Weise unter Bezugnahme auf die Zeichnungen näher erläutert. In diesen zeigen:

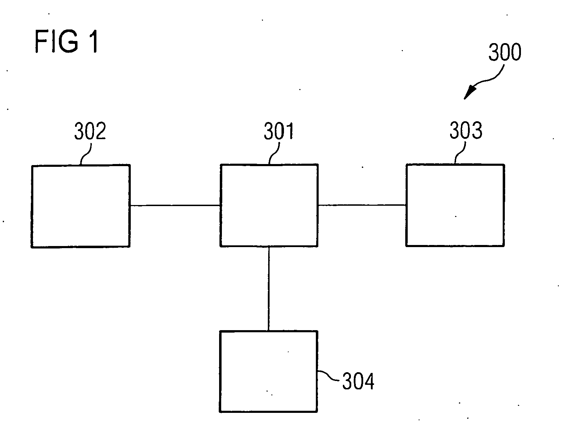

- Fig. 1: ein Blockschaltbild einer Schaltungsanordnung 300 als Ausführungsbeispiel der erfindungsgemäßen Schaltungsanordnung.

In Fig. 1 ist das Blockschaltbild einer Schaltungsanordnung 300 als Ausführungsbeispiel der erfindungsgemäßen Schaltungsanordnung dargestellt. Die Schaltungsanordnung 300 enthält einen DMA-Controller 301, welcher zwischen einen Schaltungsteil 302 der Schaltungsanordnung 300 und einen Zwischenspeicher 303 geschaltet ist. Ferner ist der DMA-Controller 301 an eine Steuereinheit 304 angeschlossen.

Der Schaltungsteil 302 ist derart ausgeführt, dass er bei Bedarf in einen Niedrigleistungs-Betriebsmodus überführt werden kann. Da die Register und die flüchtigen Speicherelemente des Schaltungsteils 302 im Niedrigleistungs-Betriebsmodus ihre Inhalte verlieren, müssen diese Inhalte vor dem Herunterfahren des Schaltungsteils 302 in den Niedrigleistungs-Betriebsmodus in dem Zwischenspeicher 303 zwischengespeichert werden. Diese Maßnahme gewährleistet, dass die zwischengespeicherten Daten nach einem späteren "Aufwecken" des Schaltungsteils 302 zur Verfügung stehen und wieder in den Schaltungsteil 302 geladen werden können.

Dem zwischen dem Schaltungsteil 302 und dem Zwischenspeicher 303 angeordneten DMA-Controller 301 kommt die Aufgabe zu, die vorstehend beschriebenen Datentransfers bei einem Wechsel des Betriebsmodus vorzunehmen. Zu diesem Zweck hat der DMA-Controller 301 Zugriff auf zwei Listen, die jeweils die benötigten Informationen für eine Datentransferrichtung enthalten. Jede Liste enthält die Start- und Zieladressen, die Inkrementoperationen für die Start- und Zieladressen sowie die Anzahl der auszuführenden Datentransfers. In jeder Liste können auch Sequenzen von Datentransfers beschrieben sein. In diesem Fall werden die Daten für jeden Datentransferblock nacheinander automatisch von dem DMA-Controller 301 gelesen. Die beiden Listen können beispielsweise in dem Zwischenspeicher 303 abgelegt sein.

Sobald der Schaltungsteil 302 in einen Niedrigleistungs-Betriebsmodus überführt werden soll, wird dies dem DMA-Controller 301 von der Steuereinheit 304 signalisiert, woraufhin der DMA-Controller 301 die in der einen Liste beschriebene Datensicherung durchführt. Nach Abschluss dieses Datensicherungsvorgangs kann der Schaltungsteil 302 von seiner Versorgungsspannung getrennt werden.

Nach dem Ende der Niedrigleistungsphase erhält der DMA-Controller 301 wiederum ein Steuersignal von der Steuereinheit 304, damit er die zuvor zwischengespeicherten Daten wieder in die Register und flüchtigen Speicherelemente des Schaltungsteils 302 schreibt. Erst nachdem dieser Vorgang abgeschlossen ist, kann ein in der Schaltungsanordnung 300 angeordneter Mikrocontroller wieder auf den Schaltungsteil 302 zugreifen. Sollte der Mikrocontroller auch heruntergefahren worden sein, so wird der Mikrocontroller erst nach Abschluss des beschriebenen Datentransfers "aufgeweckt".

Es ist des Weiteren auch möglich, den DMA-Controller 301 selbst in einen Niedrigleistungs-Betriebsmodus herunterzufahren. In diesem Fall muss der DMA-Controller 301 so ausgelegt sein, dass er sich selbst - unmittelbar nachdem er aufgeweckt wurde - konfiguriert, indem er Daten aus vorgegebenen Adressen des Zwischenspeichers 303 in seine Register lädt.

Die Steuereinheit 304 kann entweder Teil des Mikrocontrollers sein oder eine Hardware-Einheit.

Der Zwischenspeicher 303 kann sich auf demselben Chip wie der DMA-Controller 301 und der Schaltungsteil 302 befinden oder auch auf einem separaten Chip.

Die Schaltungsanordnung 300 kann beispielsweise in Mobilfunkgeräten eingesetzt werden, deren Speicherelemente in der Regel aus flüchtigen SRAM-Elementen bestehen. Im GSM-Standard ist der Stand-by-Betriebsmodus obligatorisch, sobald sich das Mobilfunkgerät nicht in einer aktiven Phase befindet. Dies ermöglicht es, den Batterieverbrauch gering zu halten. Sofern das Mobilfunkgerät in der Lage sein muss, eingehende Anrufe entgegenzunehmen, beträgt die Dauer der aktiven Phasen typischerweise nur einige Zehn Millisekunden, während die inaktiven Phasen bis zu 2,5 Sekunden dauern können.

DRAM-Speicherelemente können in Mobilfunkgeräten vorzugsweise als Zwischenspeicher eingesetzt werden, da sie in der Lage sind, große Datenmengen mit einer großen Bandbreite zwischenzuspeichern. Dafür eignen sich besonders spezielle DRAMs mit niedrigem Energieverbrauch, die darauf optimiert sind, wenig "refresh"-Strom pro Bit zu benötigen. Die erfindungsgemäße Schaltungsanordnung ermöglicht es, den größten Teil der Logikschaltung des Mobilfunkgeräts bei Bedarf in einen Stand-by-Betriebsmodus zu überführen.

## Patentansprüche

1. Schaltungsanordnung (300) mit
- einem Schaltungsteil (302), welcher Speicherelemente aufweist, die bei einem Niedrigleistungs-Betriebsmodus ihre Speicherinhalte verlieren, und
- einer Speichereinheit (303), welche ihren Speicherinhalt während eines Niedrigleistungs-Betriebmodus des Schaltungsteils (302) beibehält,
**gekennzeichnet durch**
- einen DMA-Controller (301), welcher dazu ausgelegt ist, die in vorgegebenen Speicherelementen des Schaltungsteils (302) abgelegten Daten vor einem Wechsel des Schaltungsteils (302) von einem Normalleistungs-Betriebsmodus in einen Niedrigleistungs-Betriebsmodus in die Speichereinheit (303) zu schreiben und diese Daten nach der Rückkehr des Schaltungsteils (302) in den Normalleistungs-Betriebsmodus in die Speicherelemente zurückzuschreiben.

2. Schaltungsanordnung (300) nach Anspruch 1, **gekennzeichnet durch**
- eine erste Liste, welche Informationen über die vor einem Wechsel des Schaltungsteils (302) von einem Normalleistungs-Betriebsmodus in einen Niedrigleistungs-Betriebsmodus auszuführenden Datentransfers aufweist, und
- eine zweite Liste, welche Informationen über die nach der Rückkehr des Schaltungsteils (302) in den Normalleistungs-Betriebsmodus auszuführenden Datentransfers aufweist.

3. Schaltungsanordnung (300) nach Anspruch 2,
**dadurch gekennzeichnet,**
- **dass** die erste Liste und/oder die zweite Liste in der Speichereinheit (303) abgelegt sind.

4. Schaltungsanordnung (300) nach einem oder mehreren der vorhergehenden Ansprüche,
**dadurch gekennzeichnet,**
- **dass** die Speicherelemente des Schaltungsteils (302), die bei einem Niedrigleistungs-Betriebsmodus ihre Speicherinhalte verlieren, flüchtige Speicher und/oder Register umfassen.

5. Schaltungsanordnung (300) nach einem oder mehreren der vorhergehenden Ansprüche,
**gekennzeichnet durch**
- eine Hardwareeinheit (304) oder einen Prozessor (304), welche oder welcher dazu ausgelegt ist, Steuersignale zu erzeugen, die vor einem Wechsel des Schaltungsteils (302) von einem Normalleistungs-Betriebsmodus in einen Niedrigleistungs-Betriebsmodus und/oder nach der Rückkehr des Schaltungsteils (302) in den Normalleistungs-Betriebsmodus den DMA-Controller (301) veranlassen, die notwendigen Datentransfers auszuführen.

6. Schaltungsanordnung (300) nach einem oder mehreren der vorhergehenden Ansprüche,
**dadurch gekennzeichnet,**
- **dass** der DMA-Controllers (301) derart ausgelegt ist, dass er bei einem Hochfahren aus einem Niedrigleistungs-Betriebsmodus die für seine Konfiguration benötigten Konfigurationsdaten aus der Speichereinheit (303) lädt.

## Claims

1. Circuit arrangement (300) having
- a circuit element (302) which has memory elements which lose their memory contents during a low-power operating mode, and
- a memory unit (303) which retains its memory contents when the circuit element (302) is in a low-power operating mode,
**characterized by**
- a DMA controller (301) which is designed to write the data which is stored in predetermined memory elements of the circuit element (302) to the memory unit (303) before the circuit element (302) changes from a normal-power operating mode to a low-power operating mode, and to write this data back to the memory elements after the circuit element (302) returns to the normal-power operating mode.

2. Circuit arrangement (300) according to Claim 1,
**characterized by**
- a first list, which has information about the data transfer to be carried out before the circuit element (302) changes from a normal-power operating mode to a low-power operating mode, and
- a second list, which has information about the data transfer to be carried out after the circuit element (302) returns to the normal-power operating mode.

3. Circuit arrangement (300) according to Claim 2,
**characterized**
- **in that** the first list and/or the second list are/is stored in the memory unit (303).

4. Circuit arrangement (300) according to one or more of the preceding claims,
**characterized**
- **in that** the memory elements in the circuit element (302), which lose their memory contents during a low-power operating mode, comprise volatile memories and/or registers.

5. Circuit arrangement (300) according to one or more of the preceding claims,
**characterized by**
- a hardware unit (304) or a processor (304) which is designed to produce control signals which cause the DMA controller (301) to carry out the necessary data transfers before the circuit element (302) changes from a normal-power operating mode to a low-power operating mode, and/or after the circuit element (302) returns to the normal-power operating mode.

6. Circuit arrangement (300) according to one or more of the preceding claims,
**characterized**
- **in that** the DMA controller (301) is designed such that it loads the configuration data which is required for its configuration from the memory unit (303) during running up from a low-power operating mode.

## Revendications

1. Le circuit (300) comprenant
- une partie de circuit (302), qui comporte des éléments de mémorisation qui perdent leur contenu lorsqu'ils sont dans un mode de fonctionnement à faible puissance et
- une unité de mémorisation (303), qui conserve son contenu lorsque la partie de circuit (302) se trouve dans un mode de fonctionnement à faible puissance,
**caractérisé par**
- un contrôleur DMA (301) qui est conçu pour écrire des données, stockées dans des éléments de mémorisation prescrits de la partie de circuit (302), dans l'unité de mémorisation (303) avant que la partie de circuit (302) ne passe d'un mode de fonctionnement à puissance normale dans un mode de fonctionnement à faible puissance et pour réécrire ces données dans les éléments de mémorisation lorsque la partie de circuit (302) retourne dans le mode de fonctionnement à puissance normale.

2. Circuit (300), selon la revendication 1, **caractérisé par**
- une première liste qui contient des informations sur les transferts de données à effectuer avant un passage de la partie de circuit (302) du mode de fonctionnement à puissance normale dans le mode de fonctionnement à puissance réduite, et
- une deuxième liste qui contient des informations sur les transferts de données à effectuer après le retour de la partie de circuit (302) dans le mode de fonctionnement à puissance normale.

3. Circuit (300) selon la revendication 2, **caractérisé en ce que**
- la première liste et/ou la deuxième liste sont stockées dans l'unité de mémorisation (303).

4. Circuit (300) selon l'une ou plusieurs des revendications précédentes, **caractérisé en ce que**
- les éléments de mémorisation de la partie de circuit (302), qui perdent leur contenu en mode de fonctionnement à faible puissance, comportent des mémoires volatiles et/ou des registres.

5. Circuit (300) selon l'une ou plusieurs des revendications précédentes, **caractérisé par**
- une unité matérielle (304) ou un processeur (304) qui est conçu pour générer des signaux de commande qui ordonnent au contrôleur DMA (301) d'effectuer les transferts de données nécessaires avant que la partie de circuit (302) ne passe d'un mode de fonctionnement à puissance normale dans un mode de fonctionnement à faible puissance et/ou après le retour de la partie de circuit (302) dans le mode de fonctionnement à puissance normale.

6. Circuit (300) selon l'une ou plusieurs des revendications précédentes, **caractérisé en ce que**
- lors de l'abandon d' un mode de fonctionnement à faible puissance, le contrôleur DMA (301) est conçu de façon à aller chercher dans la mémoire de mémorisation (303) les données de configuration dont il a besoin pour sa configuration.
